# EUROPEAN PATENT SPECIFICATION

(11) **EP 4 299 384 B1**
(45) Date of publication and mention of the grant of the patent: **03.09.2025**
(21) Application number: 22181762.0
(22) Date of filing: 29.06.2022
(51) Int. Cl.: B60R 13/04, B60J 10/79

(54) **APPLIQUE ARRANGEMENT AND DOOR ARRANGEMENT FOR A VEHICLE**
APPLIKATIONSANORDNUNG UND TÜRANORDNUNG FÜR EIN FAHRZEUG
AGENCEMENT D'APPLIQUE ET AGENCEMENT DE PORTE POUR UN VÉHICULE

(43) Date of publication of application: 03.01.2024
(73) Proprietor: Cooper Standard GmbH, 88131 Lindau (DE)
(72) Inventor: Roeser, Achim, 88131 Lindau (DE); Gras, Patrice, 35503 Vitré Cedex (FR)
(74) Representative: Witte, Weller & Partner Patentanwälte mbB

(56) References cited:
- DE-U1- 202004 010 601
- FR-A1- 3 057 213
- FR-A1- 3 107 212
- US-A1- 2012 025 564
- US-A1- 2020 247 220

## Description

The present invention relates to a door arrangement for a vehicle, comprising a B-pillar of a body of the vehicle, a front door, a rear door, and an applique arrangementcomprising an applique which is configured to be arranged between the front door window and the rear door window.

In document US 2020/0338966 A1, a front door has a first upright adjacent to a rear door, and the rear door has a second upright adjacent to the front door. The two uprights, together, form an applique arrangement between the front door window and the rear door window.

Document WO 2010/048619 A1 discloses a combined glass run and applique assembly for a vehicle, comprising an applique, a glass run for a receiving perimeter portions of a vehicle window, and a mechanical engagement assembly interconnecting the applique and the glass run.

An applique is typically a slightly curved or essentially planar metal, plastic or glass component or a component which is formed by an arbitrary combination of these materials. In each case, it typically follows the unique window curvature and it is positioned in the area of a B-pillar or a C-pillar of the vehicle. The applique forms a cover for a B-pillar or a C-pillar, for example.

As shown in document WO 2010/048619 A1, the applique disclosed therein extends typically beyond an edge of an adjacent window in a longitudinal direction, so as to facilitate sealing of the window.

A door arrangement with the features of the preamble of claim 1 is known from document FR 3 057 213 A1.

Further door arrangements are known form documents US 2012/025564 A1, FR 3 107 212 A1, US 2020/247220 A1 and DE 20 2004 010601 U1.

It is an object of the present invention to provide an improved applique arrangement and an improved door arrangement for a vehicle.

The above object is achieved by a door arrangement as defined in claim 1, wherein the applique arrangement comprises a single applique which is configured to be arranged between the front door window and the rear door window, and an applique support to which the applique is mounted, wherein the applique support is configured to be rigidly connected to a rear door body of a body of the vehicle.

The door arrangement comprises a B-pillar of a body of the vehicle, a front door, a rear door and an applique arrangement, wherein the front door has a front door bodywork and a front door window, wherein the rear door has a rear door bodywork and a rear door window.

The use of a single applique between the front door window and the rear door window allows to provide a clean appearance of the entire door arrangement, resulting in only three visible vertical lines on the outside in a closed window position. The single applique is mounted to an applique support, and the applique support itself is configured to be rigidly connected the rear door body work of the rear door.

Therefore, the object is achieved in full.

In preferred embodiment, the applique support and the applique are configured so that an applique outer surface is flush with at least one of a front window outer surface and a rear window outer surface, preferably with both of the front window outer surface and the rear window outer surface.

The door arrangement to which the applique arrangement is applied, may therefore have a clean and a flat surface which extends from the front window to the rear window.

In another preferred embodiment, the applique support and the applique are configured so that a front gap between a front edge of the applique and a rear edge of the front door window is smaller than 10 mm, preferably smaller than 8 mm, and particularly preferred smaller than 6 mm, or even smaller than 5 mm.

As an alternative or additionally, the applique support and the applique are configured so that a rear gap between a rear edge of the applique and a front edge of the rear door window is smaller than 10 mm, preferably smaller than 8 mm, and particularly preferred smaller than 6 mm, or even smaller than 5 mm.

This arrangement allows to make the gaps almost invisible when viewed from a distance. Further, it is easier to seal the gap between the respective edges. Each of the gaps is preferably larger than 3 mm, particularly larger than 4 mm.

According to another preferred embodiment, the applique support is a rigid element that provides sufficient structural stiffness for the applied applique, and is preferably formed from a single layer sheet portion or from a multi-layer sheet portion. The sheet portion(s) may be made of metal, of plastics or of compound material, particularly carbon reinforced compound materials.

Further, it is preferred if the applique support comprises at least one reinforcing crimp which extends in a vertical direction.

The at least one crimp allows to increase the bending stiffness of the applique support, particularly about an axis which is essentially parallel to a longitudinal direction of the door arrangement.

Preferably, the applique support comprises two or more reinforcing crimps which are arranged at a distance from each other in the longitudinal direction.

According to the invention, the applique support is formed integrally with the rear door bodywork.

In particular, it is preferred that the applique covers at least a part of the B-pillar, and wherein a rear door swivel axis is arranged between a front edge and a rear edge of the applique.

This embodiment allows to swivel the rear door (into an opened position) such that the applique support does not interfere with the B-pillar.

The B-pillar may have a regular shape wherein an outer surface of the B-pillar runs essentially along a straight line. In some preferred embodiments, the B-pillar may have an adjusted shape with an offset portion.

Preferably, the B-pillar further comprises an offset portion for allowing a front edge of the applique and of the applique support to swivel about the rear door swivel axis without colliding with the B-pillar.

In this case, it is particular preferred if the offset portion is formed by a portion of the B-pillar above a belt line of the door arrangement.

Preferably, the front window is a sliding window guided by a guide arrangement. The guide arrangement is preferably formed such that it is not visible from the outside. Thereby, a flush appearance may be achieved. Preferably the guide arrangement includes at least one guide shoe that is attached to an inner surface of the front window.

In the door arrangement of the present disclosure the rear door window is a sliding window which is guided by a guide arrangement, wherein the guide arrangement comprises a front guide shoe which is attached to an inner surface of the rear door window, and a front guide rail which guides the guide shoe for movement in the sliding direction.

Preferably, the guide arrangement holds the window in the transversal and/or in the longitudinal direction in a positively locking manner.

The front guide rail is integrally connected with an intermediate layer element which at least partly is arranged between the applique and the applique support.

This allows to provide an improved stability of the applique and door arrangements.

The intermediate layer element extends at least from a rear edge to a front edge of the applique and includes a nose portion which extends in a transversal (lateral) direction. In addition, the intermediate layer element and or the applique itself may comprise further supporting portions which are configure to realize the connection, protection and/or optical coverage of the door bodywork.

The nose portion or another supporting portion of the applique or the intermediate layer element may be used for engagement by a sealing lip which extends from the front door, so as to seal a front gap between a front edge of the applique and a rear edge of the front door window, but may be an isolated seal as well.

The sealing lip which extends from the front door is preferably part of a front door window sealing arrangement.

Further, it is preferred in the door arrangement of the present disclosure if a rear applique sealing is connected to an interior side of the applique and includes a sealing lip which engages a front edge of the rear door window.

The rear applique sealing allows to seal a rear gap between the front edge of the rear door window and a rear edge of the applique, and it is preferably part of a rear door window sealing arrangement, but may be an isolated seal as well.

In general, the seals used for sealing the front gap and/or the rear gap, may be seals separate from the respective window sealing arrangement, but may be part of the respective window sealing arrangement as well. It is preferred if the rear applique sealing is separate from the rear window sealing arrangement, as the rear applique sealing in this case is a static seal that does not have to cope with relative movements.

The rear gap may be formed smaller (e.g. smaller than 6 mm) than the front gap due to smaller tolerances.

Further features and advantages of the invention can be taken from the subsequent description of preferred embodiments with reference to the drawings. In the drawings:
Fig. 1 is a side view of a passenger motor vehicle having a door arrangement;
Fig. 2 a detailed view of the door arrangement of Fig. 1;
Fig. 3 a sectional view along a plane III-III in Fig. 3 of an applique arrangement of an embodiment of a door arrangement, which is not encompassed by the wording of the claims;
Fig. 4 a sectional view along a plane IV-IV in Fig. 3;
Fig. 5 a sectional view similar to Fig. 3 of applique arrangement of an embodiment of a door arrangement according to the claimed invention;
Fig. 6 a sectional view similar to Fig. 3 of an embodiment of an applique arrangement for a door arrangement which is not encompassed by the wording of the claims; and
Fig. 7 a sectional view similar to Fig. 3 of another embodiment of an applique arrangement for a door arrangement which is not encompassed by the wording of the claims.

In the following, embodiments of the present disclosure are described in detail.

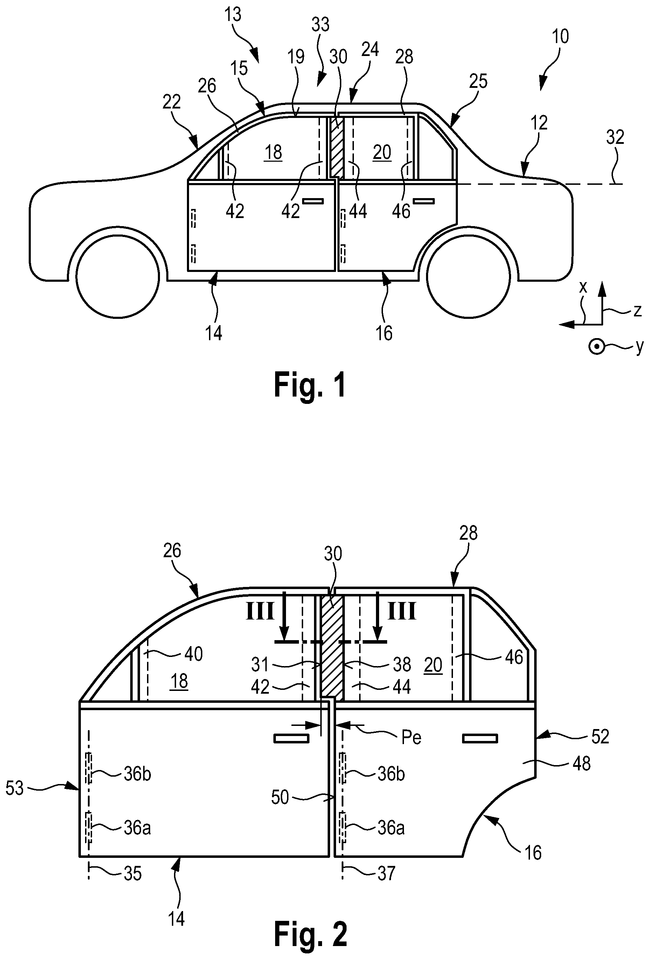

An automobile like a passenger car vehicle is schematically shown in Fig. 1 and generally denoted by 10. The vehicle 10 has a body 12 to which are hingedly connected a front door 14 and a rear door 16. A part of the body 12, the front door 14, and the rear door 16 together form a door arrangement 13.

Further, the front door 14 and the rear door 16 together form a window frame 15.

The front door 14 has a front door window 18. The rear door 16 has a rear door window 20.

The front door 14 and the rear door 16 are each preferably hingedly mounted at their respective forward edges. The body 12 includes an A-pillar region 22 in the area of the forward edge of the front door 14, and a B-pillar region 24 which is arranged essentially in an area between the front door 14 and the rear door 16. Preferably, the rear door 16 is hingedly mounted to the B-pillar region 24, and a rear edge of the rear door 16 is adjacent to a C-pillar region 25.

The front door 14 has a front door window sealing arrangement 26 for the front door window 18. The rear door 16 has a rear door window sealing arrangement 28 for the rear door window 20.

The body 12 defines a first direction X which is preferably a longitudinal direction of the vehicle 10. In addition, the body 12 defines a second direction Y, which is preferably a transversal/lateral direction of the vehicle 10. Further, the body 12 defines a third direction Z which is preferably a vertical direction of the vehicle 10. The three directions are also used to describe a door arrangement 13.

The vehicle 10 includes an applique arrangement 33 which is provided in the B-pillar region 24 between the front door window 18 and the rear door window 20. The applique arrangement 33 includes an applique 30 which has a front edge 31 which is adjacent to the front door window 18. The applique 30 is arranged above a belt line 32 of the door arrangement 13.

The front door 14 is pivotably mounted to the body 12 by means of hinges 34a, 34b which define a front door swivel axis 35, which is arranged in the A-pillar region 22.

The rear door 16 is mounted to the body 12 by means of hinges 36a, 36b which are arranged in the B-pillar region 24 and define a rear door swivel axis 37.

A rear edge of the applique 30 is shown at 38 and is adjacent to the rear door window 20.

Each one of the front door window 18 and the rear door window 20 is a sliding window. The front door window 18 is guided for this purpose by means of a front guide arrangement 40 and a rear guide arrangement 42. Similarly, the rear door window 20 is guided by a front guide arrangement 44 and a rear guide arrangement 46.

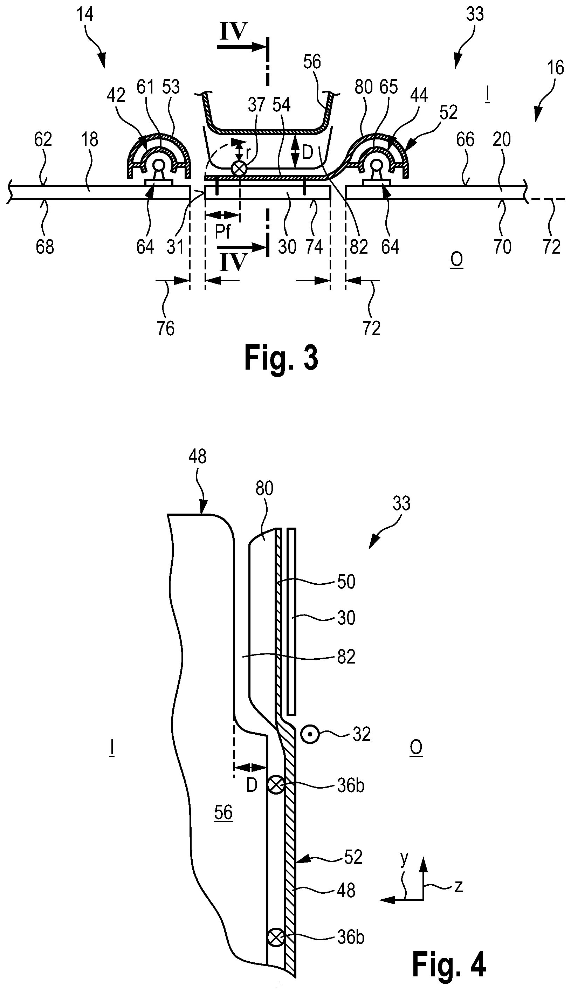

The guide arrangements 40 to 46 are in each case arranged on an inside I (cf. Fig. 3) of the body 12, i.e. in the area of a passenger compartment. Preferably, the guide arrangements 40 to 46 do not extend to the outside O, and preferably do not cover any part of outer surfaces of the front and rear door windows 18,20.

The rear door 16 has a rear door panel 48 which is arranged essentially below the belt line 32 of the body 12 and faces to the outside O (cf. Fig. 3). The rear door panel 48 has a front edge 50 which is arranged in the B-pillar region 24.

The body 12 is typically made from sheet material, particularly metal sheet material. The metal can be steel or aluminum. The body 12 may, at least partially, be formed from compound materials like fiber reinforced materials etc.

On the other hand, the rear door 16 includes a rear door body work 52, and the front door 14 includes a front door body work 53. The rear and front door body works 52, 53 may each be made from the same materials as the body 12, but can be made from different materials as well.

As is shown in Fig. 2, the applique 30 of the applique arrangement 33 is a single applique 30. Further, the applique 30 is rigidly connected to the rear door body work 52. The applique 30 is arranged so as to be adjacent to the front door window 18 and the rear door window 20. Preferably, the applique is configured and mounted such that an applique outer surface is essentially flush with the outer surfaces of the front and rear door windows 18, 20.

Further, the applique 30 is configured and mounted such that its front edge 31 protrudes forwardly with respect to the front edge 50 of the rear door panel 48 by a lower protrusion amount PI. Preferably, the lower protrusion amount PI is larger than 20 mm, particularly larger than 30 mm. Preferably, the lower protrusion amount PI is smaller than 150 mm, particularly smaller than 120 mm.

Figs. 3 and 4 are sectional views of an exemplarily applique arrangement 33 which may be combined with the above-described door arrangement 13 which is not encompassed by the claims.

As can be seen in Fig. 3, the single applique 30 of the applique arrangement 33 is rigidly connected to the rear door 16, particularly to the rear door body work 52.

Particularly, the rear door body work 52 includes a rear door body work protrusion 54 which forms an applique support. The rear door body work protrusion 54 protrudes forwardly from the rear door 16 in the first (longitudinal) direction X and at least partially covers a B-pillar 56 of the body 12. Preferably, the rear door body work protrusion 54 covers the entire B-pillar 56.

The rear door body work protrusion 54 is preferably formed from sheet metal and has a plate like shape that extends essentially in a plane defined by the first direction X and the third direction Z. The applique 30 is mounted to the outer surface of the rear door body work protrusion 54. A fastening arrangement that is suitable for this purpose is schematically shown at 58. The fastening arrangement may be realized by a variety of different fastening concepts.

Fig. 3 shows a part of the rear guide arrangement 42 of the front door 14. Particularly, a rear guide shoe 60 is rigidly attached to an inner surface 62 of the front door window 18. The rear guide shoe 60 is guided for movements along the third direction Z in a rear guide rail 61 of the rear guide arrangement 42. The rear guide rail 61 is rigidly attached to the front door body work 53.

Fig. 3 also shows a part of a front guide arrangement 44 of the rear door 16. Particularly, a front guide shoe 64 is rigidly attached to an inner surface 66 of the rear door window 20, and is guided by a front guide rail 65 of the front guide arrangement 44 of the rear door 16 in the third direction Z.

Details of the front guide arrangement 40 of the front door 14 and details of the rear guide arrangement 46 of the rear door 16 are not shown in Fig. 3.

The front door window 18 has a front window outer surface 68. The rear door window 20 has a rear window outer surface 70. The outer surfaces 68, 70 share a common outer surface plane 72.

An outer surface 74 of the applique 30 is preferably arranged within the same outer surface plane 72.

The applique 30 is arranged and mounted to the applique support 54 such that a front gap 76 between a front edge 31 of the applique 30 and a rear edge of the front door window 18 is smaller than 10 mm.

Similarly, the applique 30 is configured and mounted to the applique support 54 such that a rear gap 78 between a rear edge 38 of the applique 30 and a front edge of the rear door window 20 is smaller than 10 mm. The front and rear gaps 76, 78 are preferably smaller than 8 mm, and larger than 3 mm, preferably larger than 4 mm. Preferably, the rear gap 78 is smaller than the front gap 76 and is preferably smaller than 6 mm.

The inside of the front guide arrangement 44 of the rear door 16 is preferably covered by a cover portion 80 which may be part of the rear door body work 52. The cover portion 80 itself may be covered by a covering made from a softer material.

The rear door body work protrusion 54 essentially extends between the rear guide rail 61 and the front guide rail 65 and is arranged essentially parallel to the longitudinal direction X.

Fig. 3 shows schematically the rear door swivel axis 37 as is determined by the hinges 36a, 36b of the rear door, as also shown in Fig. 4.

The rear door swivel axis 37 is arranged between the front edge 31 and the rear edge 38 of the applique 30 in the longitudinal direction X. In the second transversal direction Y, the rear door swivel axis 37 is preferably arranged on the inside of the rear door body work protrusion 54.

A distance between the rear door swivel axis 37 and the front edge 31 of the applique 30 is defined by a front protrusion amount Pf as shown in Fig. 3. The front protrusion amount Pf is preferably larger than 5 mm, preferably larger than 10 mm. In a preferred embodiment, the front protrusion amount Pf is smaller than 120 mm, preferably smaller than 100 mm.

The front protrusion amount Pf, together with the combined thickness of the rear door body work protrusion 54 and the applique 30, defines a pivot radius R. The pivot radius R is dimensioned such that a swivel movement of the rear door 16 does not interfere with the B-pillar 56.

To this purpose, as shown in Fig. 4, the B-pillar 56, preferably, has an offset portion 82 as shown in Figs. 3 and 4. The offset portion 82 has a offset portion depth D in the transversal direction Y.

The offset portion 82 of the B-pillar 56 is preferably arranged above the belt line 32 of the door arrangement 13, particularly preferred only above the belt line 32. The dimension of the offset portion depth D is preferably larger than 10 mm, particularly larger than 15 mm, preferably larger than 20 mm, preferably larger than 40 mm, preferably larger than 50 mm. Further, it is preferred if the dimension of the offset portion depth D is smaller than 150 mm, particularly smaller than 120 mm, and also preferably smaller than 100 mm.

In any case, the offset portion depth D is chosen such that it is larger than the front swivel radius R of the rear door 16. This allows that a front edge 31 of the applique 30 and the applique support 54 may swivel about the rear door swivel axis 37 without colliding with the B-pillar 56.

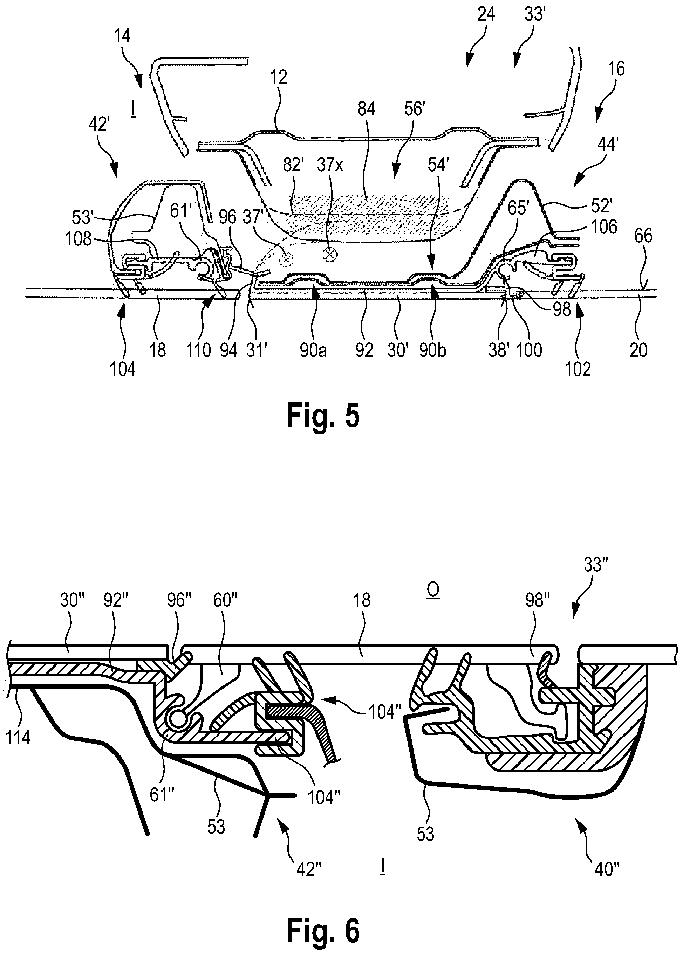

Fig. 5 shows an embodiment of a door arrangement with an applique arrangement 33'. The applique arrangement 33' corresponds with respect to structure and function and appearance to the applique arrangement 33 of Figs. 3 and 4. Same or similar elements are given the same refence numerals. In the following, therefore, mainly differences against the applique arrangement 33 are described below.

As is shown in Fig. 5, the rear door body work protrusion 54' is formed by two essentially parallel sheets of the rear door body work 52'. The rear door swivel axis 37' allows that the rear door can be pivoted (swiveled) without colliding with the B-pillar 56'. On the other hand, if the rear door swivel axis 37' needs to be moved, for example to another location shown at 37x, it might be necessary to provide an offset portion 82'. An allowable offset portion area for providing such offset portion 82' is shown schematically in hatched lines at 84.

Further, it can be seen in Fig. 5 that the rear door body work protrusion 54 has two crimps 90a, 90b which essentially extend along the third direction Z. The crimps 90a, 90b improve the rigidity of the rear door body work protrusion 54', particularly against a bending movement about an axis which is arranged essentially parallel to the longitudinal direction X.

Fig. 5 further shows that the front guide rail 65' of the front guide arrangement 44' of the rear door 16 is made from an element which is separate from the rear door body work 52'. The front guide rail 65' may be made from plastics material, particularly a relatively hard plastics material. The front guide rail 65 is preferably connected integrally to an intermediate layer 92 which is also made from plastics material and has the shape of a layer or a sheet. The intermediate layer 92 is arranged between the applique 30' and the rear door body work protrusion 54' in the transversal direction Y.

The intermediate layer 92 extends from the front guide rail 65 in the longitudinal direction X to the front door 14.

The intermediate layer 92 comprises a nose portion 94 at its forward end. The nose portion 94 is located close to the front edge 31' of the applique 30' and extends to the inside I in the transversal direction. The nose portion 94 may be used to fasten the intermediate layer 92 to the rear door body work protrusion 54'. Further, the nose portion 94 extends such that it can be engaged by a front applique sealing 96 which extends from the front door 14 and may be part of the front door window sealing arrangement 26.

The element which forms the intermediate layer 92 and the front guide rail 65' can be connected rigidly to the applique 30'. The applique 30' and this element may be mounted in advance before the installation in a production line of the vehicle. The combined arrangement of the applique 30' and the element which forms the intermediate layer 92 and the front guide rail 65', may be fastened to the rear door body work protrusion 54' by any suitable fastening arrangement, e.g. by latching, screwing, by means of an adhesive, etc.

Similarly, the attachment between the applique 30' and the intermediate layer 92 may be any suitable attachment, e.g. by means of an adhesive.

While the front applique sealing 96 assists in sealing the inside I against the outside O in the area of the front gap 76, there is additionally provided a rear applique sealing 98 which is used for sealing the inside I against the outside O in the area of the rear gap 78. The rear applique sealing 98 may be fixedly attached to the applique 30' and/or to the intermediate layer 92 and/or to the front guide rail 65'. A sealing lip 100 of the rear applique sealing 98 extends from the applique 30' to the front edge of the rear door window 20.

Both, the front applique sealing 96 and the rear applique sealing 98 may comprise respective additional sealing lips which engage on inner surfaces of the front door window 18 and the rear door window 20. Particularly, a rear window sealing 102 includes additional sealing lips which engage the inner surface of the rear door window 20. Similarly, a front window sealing 104 engages an inner surface of the front door window 18. The rear window sealing 102 is mounted to a carrier element 106 which may be integrally connected to the front guide rail 65'.

On the other hand, the front window sealing 104 is mounted to a carrier element 108 which may be formed integrally with the rear guide rail 61 of the rear guide arrangement 42 of the front door 14.

As is shown in Fig. 5, the front door window sealing arrangement 26 includes a second front window sealing 110 which is arranged longitudinally between the front window sealing 104 and a rear edge of the front door window 18. The second front window sealing 110 also engages an inner surface of the front door window 18.

In the following, examples are described which correspond to the above embodiment of Fig. 3, 4 and 5 with respect to structure, function, and appearance. Same or similar elements are given the same refence numerals. Mainly differences to the embodiment of Fig. 3, 4 and 5 are described below.

Fig. 6 shows an applique arrangement 33" of a door arrangement which is not encompassed by the claims.

The applique arrangement 33" may correspond in its structure and function to either the applique arrangement 33 or the applique arrangement 33' described above.

In contrast thereto, the applique arrangement 33" includes an applique 30" which is supported by a front door body work protrusion 114 of the front door body work 53. As shown in Fig. 6, the front door body work protrusion 114 extends rearwardly from the front door window 18 in the longitudinal direction to the rear door (not shown in Fig. 6).

The front door body work protrusion 114 may be formed and shaped similarly to the rear door body work protrusion 54, but is part of the front door body work 53, so that the applique 30" is a single applique which is configured to be arranged between the front door window 18 and the rear door window 20, wherein an applique support is formed by the front door body work protrusion 114.

Fig. 6 also shows that an intermediate layer 92" is formed integrally with a rear guide rail 61" of the rear guide arrangement 42" of the front door, and with a carrier element 108" to which a front window sealing 104" is mounted.

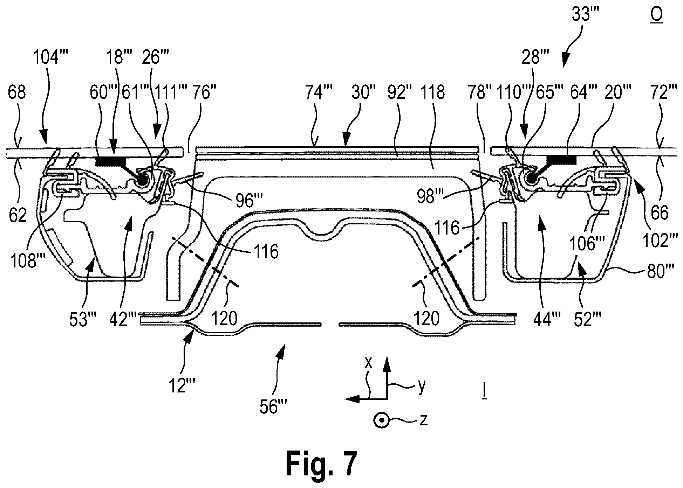

Fig. 7 shows an applique arrangement 33‴ of a door arrangement which is not encompassed by the claims. The applique arrangement 33‴ corresponds in its structure and function generally to the above applique arrangements. Mainly the differences are described below. The applique arrangement 33‴ allows for a visual appearance as typically realized in frameless door constructions, but it is also applicable for framed doors. Further, cameras or other electronical devices may be integrated underneath the B-pillar applique. In this case, or for other reasons, the B-pillar applique can also be realized as a glass design (rather than for example high gloss plastic).

In the applique arrangement 33‴, a single applique 30‴ is configured to be arranged between the rear door window 20‴ and a front door window 18 (not shown in Fig. 7). The single applique 30‴ is mounted (directly or via an intermediate layer 92‴) to an applique carrier 118‴ which is rigidly fastened to the the B-pillar 56‴ wherein the applique carrier 118 defines an applique support.

As in the embodiments of Fig. 3 to 6, the outer window surfaces 68‴, 72‴ are preferably flush with an outer surface 74‴ of the applique 30"'. The front door window18‴ and the rear door window 20‴ are preferably each sliding windows and are guided by respective guide arrangements (of which are shown guide arrangements 42‴, 44‴ in Fig.7). The guide arrangements 42"', 44‴ each are formed such that the respective front and rear windows 18"', 20‴ are guided for movement along the vertical direction Z and that the positions of the front and rear windows 18"', 20‴ in the longitudinal direction X and in the transversal direction Y are positively fixed. This allows to achieve high vibration resistance and high noise insulation. Particularly, the guide arrangements 42"', 44‴ each comprise guide shoes 60"', 64‴ which are guided in respective guide rails 61‴, 65‴ that perform these functions, same as in each of the above embodiments 33', 33", and 33"'.

Preferably, the front guide rail 65‴ of the front guide arrangement 44‴ of the rear door 16 is formed integrally with a carrier element 106‴ to which the rear window sealing 102‴ is mounted.

In addition, an additional carrier element 116 of the rear door 16 is attached to a part of the rear door body work 52‴. A rear applique sealing 98‴ is formed by a sealing lip which is fixedly attached to the additional carrier element 116. A second front window sealing 110‴ may be connected to the additional carrier element 116 and/or to the element which forms the front guide rail 65.

Preferably, the rear guide rail 61‴ of the rear guide arrangement 44" of the front door 14 is formed integrally with a carrier element 108‴ to which the front window sealing 104‴ is mounted.

In addition, an additional carrier element 117 of the front door 14 is attached to a part of the front door body work 53‴. A front applique sealing 96‴ is formed by a sealing lip which is fixedly attached to the additional carrier element 117. A second front window sealing 111‴ may be connected to the additional carrier element 117 and/or to the element which forms the rear guide rail 61"'.

The applique 30‴ is attached to an applique carrier 118, either with or without an intermediate layer 92‴. The applique carrier is rigidly attached to the B-pillar 56"', as is schematically shown at 120. Any attachment arrangement 120 can be used to achieve this function.

The applique arrangement 33‴ allows for a visual appearance as typically realized in frameless door constructions, but it is also applicable for framed doors. Further, cameras or other electronical devices may be integrated underneath the B-pillar applique. In this case, or for other reasons, the B-pillar applique can also be realized as a glass design (rather than for example high gloss plastic). These features and advantages may be realized in any of the above describes embodiments.

### Reference numerals

- 10: automobile/vehicle
- 12: body
- 13: door arrangement
- 14: front door
- 15: window frame
- 16: rear door
- 18: front door window
- 19: upper edge (18)
- 20: rear door window
- 22: A-pillar region
- 24: B-pillar region
- 25: C-pillar region
- 26: front door window sealing arrangement
- 28: rear door window sealing arrangement
- 30: applique
- 31: front edge 30
- 32: belt line
- 33: applique arrangement
- 34a,34b: hinges front door
- 35: front door swivel axis
- 36a,36b: hinges rear door
- 37: rear door swivel axis
- 38: rear edge 30
- 40: front guide arrangement front door
- 42: rear guide arrangement front door
- 44: front guide arrangement rear door
- 46: rear guide arrangement rear door
- 48: rear door panel
- 50: front edge rear door panel
- 52: rear door bodywork
- 53: front door bodywork
- 54: rear door bodywork protrusion (applique support)
- 56: B-pillar
- 58: fastening arrangement 54/30
- 60: rear guide shoe 42
- 61: rear guide rail 42
- 62: inner surface of front window
- 64: front guide shoe 44
- 65: front guide rail 44
- 66: inner surface of rear window
- 68: front window outer surface
- 70: rear window outer surface
- 72: outer surface plane 68,70
- 74: applique outer surface
- 76: front gap
- 78: rear gap
- 80: cover portion 52
- 82: offset portion 56
- 84: offset portion area
- 90a,90b: crimp
- 92: intermediate layer
- 94: nose portion
- 96: front applique sealing
- 98: rear applique sealing
- 100: sealing lip 98
- 102: rear window sealing
- 104: front window sealing
- 106: carrier element 102
- 108: carrier element 104
- 110: second front window sealing
- 111: second front window sealing
- 114: front door bodywork protrusion (applique support)
- 116: additional carrier element
- 117: additional carrier element
- 118: applique carrier

- X: longitudinal (first) direction
- Y: vertical (third) direction
- Z: transversal (second) direction
- I: inside
- O: outside
- PI: lower protrusion amount 31/50
- R: front swivel radius of rear door
- Pf: front protrusion amount
- D: offset portion depth

## Claims

1. A door arrangement (13) for a vehicle (10), comprising a B-pillar (56) of a body (12) of the vehicle (10), a front door (14), a rear door (16), and an applique arrangement (33), wherein the front door (14) has a front door bodywork (53) and a front door window (18), wherein the rear door (16) has a rear door bodywork (52) and a rear door window (20), wherein the applique arrangement comprises
- a single applique (30) which is configured to be arranged between the front door window (18) and the rear door window (20),
- an applique support (54) to which the applique (30) is mounted,
wherein the applique support (54) is rigidly connected to the rear door bodywork (52),
wherein the rear door window (20) is a sliding window which is guided by a guide arrangement (44,46), wherein the guide arrangement (44,46) comprises a front guide shoe (64) which attached to an inner surface (66) of the rear door window (20), and a front guide rail (65) which guides the front guide shoe (64) for movement in the sliding direction,
wherein the front guide rail (65) is integrally connected with an intermediate layer element (92) which at least partly is arranged between the applique (30) and the applique support (54), and
wherein the intermediate layer element (92) extends at least from a rear edge (38) to a front edge (31) of the applique (30) and includes a nose portion (94) which extends in a transversal direction.

2. The door arrangement of claim 1, wherein the applique support (54) and the applique (30) are configured so that an applique outer surface (74) is flush with at least one of a front door window (18) outer surface (68) and a rear door window (20) outer surface (70).

3. The door arrangement of claim 1 or 2, wherein the applique support (54) and the applique (30) are configured so that a front gap (76) between a front edge (31) of the applique (30) and a rear edge of the front door window (18) is smaller than 10 mm, preferably smaller than 8 mm.

4. The door arrangement of any one of claims 1 to 3, wherein the applique support (54) and the applique (30) are configured so that a rear gap (78) between a rear edge (38) of the applique (30) and a front edge of the rear door window (20) is smaller than 10 mm, preferably smaller than 8 mm.

5. The door arrangement of any one of claims 1 to 4, wherein the applique support (54) is formed from a single layer or a multi-layer sheet portion.

6. The door arrangement of any one of claims 1 to 5, wherein the applique support (54') comprises at least one reinforcing crimp (90a,90b) which extends in a vertical direction (Z).

7. The door arrangement of any one of claims 1 to 6, wherein the applique support (54) is formed integrally with the rear door bodywork (52).

8. The door arrangement of any one of claims 1 to 7, wherein the applique support (54) is formed integrally with the rear door bodywork (52), wherein the applique (30) covers at least a part of the B-pillar (56), and wherein a rear door swivel axis (37) is arranged between a front edge (31) and a rear edge (38) of the applique (30).

9. The door arrangement of claim 8, wherein the B-pillar (56) comprises a offset portion (82) for allowing a front edge (31) of the applique (30) and the applique support (54) to swivel about the rear door swivel axis (37) without colliding with the B-pillar (56).

10. The door arrangement of claim 9, wherein the offset portion (82) is formed in a portion of the B-pillar (56) above a belt line (32) of the door arrangement (13).

11. The door arrangement of any one of claims 8 to 10, wherein a rear applique sealing (98) is connected to an interior side of the applique (30) and includes a sealing lip (100) which engages a front edge of the rear door window (20).

## Patentansprüche

1. Türanordnung (13) für ein Fahrzeug (10), umfassend eine B-Säule (56) einer Karosserie (12) des Fahrzeugs (10), eine Vordertür (14), eine Hintertür (16) und eine Appliqueanordnung (33), wobei die Vordertür (14) einen Vordertüraufbau (53) und ein Vordertürfenster (18) aufweist, wobei die Hintertür (16) einen Hintertüraufbau (52) und ein Hintertürfenster (20) aufweist, wobei die Appliquesanordnung umfasst
- ein einzelnes Applique (30), das dazu ausgebildet ist, zwischen dem Vordertürfenster (18) und dem Hintertürfenster (20) angeordnet zu werden,
- einen Appliqueträger (54), an dem das Applique (30) angebracht ist,
wobei der Appliqueträger (54) starr mit dem Hintertüraufbau (52) verbunden ist,
wobei das Hintertürfenster (20) ein Schiebefenster ist, das durch eine Führungsanordnung (44, 46) geführt ist, wobei die Führungsanordnung (44, 46) einen vorderen Führungsschuh (64) umfasst, der an einer Innenfläche (66) des Hintertürfensters (20) angebracht ist, und eine vordere Führungsschiene (65), die den vorderen Führungsschuh (64) zur Bewegung in der Schieberichtung führt,
wobei die vordere Führungsschiene (65) integral mit einem Zwischenschichtelement (92) verbunden ist, das zumindest teilweise zwischen dem Applique (30) und dem Appliqueträger (54) angeordnet ist, und
wobei das Zwischenschichtelement (92) sich zumindest von einer hinteren Kante (38) bis zu einer vorderen Kante (31) des Applique (30) erstreckt und einen Nasenabschnitt (94) aufweist, der sich in einer Querrichtung erstreckt.

2. Türanordnung nach Anspruch 1, wobei der Appliqueträger (54) und das Applique (30) so ausgebildet sind, dass eine Appliqueaußenfläche (74) bündig mit zumindest einer von einer Außenfläche (68) des Vordertürfensters (18) und einer Außenfläche (70) des Hintertürfensters (20) ist.

3. Türanordnung nach Anspruch 1 oder 2, wobei der Appliqueträger (54) und das Applique (30) so ausgebildet sind, dass ein vorderer Spalt (76) zwischen einer vorderen Kante (31) des Applique (30) und einer hinteren Kante des Vordertürfensters (18) kleiner als 10 mm, vorzugsweise kleiner als 8 mm ist.

4. Türanordnung nach einem der Ansprüche 1 bis 3, wobei der Appliqueträger (54) und das Applique (30) so ausgebildet sind, dass ein hinterer Spalt (78) zwischen einer hinteren Kante (38) des Applique (30) und einer vorderen Kante des Hintertürfensters (20) kleiner als 10 mm, vorzugsweise kleiner als 8 mm ist.

5. Türanordnung nach einem der Ansprüche 1 bis 4, wobei der Appliqueträger (54) aus einem einlagigen oder mehrlagigen Schicht- bzw. Blechabschnitt gebildet ist.

6. Türanordnung nach einem der Ansprüche 1 bis 5, wobei der Appliqueträger (54') mindestens eine in einer Vertikalrichtung (Z) verlaufende Verstärkungssicke (90a, 90b) aufweist.

7. Türanordnung nach einem der Ansprüche 1 bis 6, wobei der Appliqueträger (54) einstückig mit dem Hintertüraufbau (52) ausgebildet ist.

8. Türanordnung nach einem der Ansprüche 1 bis 7, wobei der Appliqueträger (54) einstückig mit dem Hintertüraufbau (52) ausgebildet ist, wobei das Applique (30) zumindest einen Teil der B-Säule (56) abdeckt, und wobei eine Hintertür-Schwenkachse (37) zwischen einer vorderen Kante (31) und einer hinteren Kante (38) des Applique (30) angeordnet ist.

9. Türanordnung nach Anspruch 8, wobei die B-Säule (56) einen Versatzabschnitt (82) umfasst, um zu ermöglichen, dass eine vordere Kante (31) des Applique (30) und der Appliqueträger (54) um die Hintertür-Schwenkachse (37) schwenken können, ohne mit der B-Säule (56) zu kollidieren.

10. Türanordnung nach Anspruch 9, wobei der Versatzabschnitt (82) in einem Abschnitt der B-Säule (56) oberhalb einer Gürtellinie (32) der Türanordnung (13) gebildet ist.

11. Türanordnung nach einem der Ansprüche 8 bis 10, wobei eine hintere Appliquedichtung (98) an einer Innenseite des Applique (30) angeschlossen ist und eine Dichtlippe (100) umfasst, die mit einer vorderen Kante des Hintertürfensters (20) in Eingriff steht.

## Revendications

1. Agencement de portière (13) pour un véhicule (10), comprenant un montant B (56) d'une carrosserie (12) du véhicule (10), une portière avant (14), une portière arrière (16) et un agencement d'applique (33), dans lequel la portière avant (14) a une coque de portière avant (53) et une glace de portière avant (18), dans lequel la portière arrière (16) a une coque de portière arrière (52) et une glace de portière arrière (20), dans lequel l'agencement d'applique comprend
- une seule applique (30) qui est conçue pour être agencée entre la glace de portière avant (18) et la glace de portière arrière (20),
- un support d'applique (54) sur lequel l'applique (30) est montée,
dans lequel le support d'applique (54) est relié de manière rigide à la coque de portière arrière (52),
dans lequel la glace de portière arrière (20) est une glace coulissante qui est guidée par un agencement de guidage (44,46), dans lequel l'agencement de guidage (44,46) comprend un patin de guidage avant (64) qui est attaché à une surface intérieure (66) de la glace de portière arrière (20), et un rail de guidage avant (65) qui guide le patin de guidage avant (64) pour un mouvement dans la direction de coulissement,
dans lequel le rail de guidage avant (65) est relié d'un seul tenant à un élément de couche intermédiaire (92) qui est au moins partiellement agencé entre l'applique (30) et le support d'applique (54), et
dans lequel l'élément de couche intermédiaire (92) s'étend au moins à partir d'un bord arrière (38) vers un bord avant (31) de l'applique (30) et comporte un bec (94) qui s'étend dans une direction transversale.

2. Agencement de portière selon la revendication 1, dans lequel le support d'applique (54) et l'applique (30) sont conçus de sorte qu'une surface extérieure d'applique (74) affleure au moins l'une parmi une surface extérieure (68) de glace de portière avant (18) et une surface extérieure (70) de glace de portière arrière (20).

3. Agencement de portière selon la revendication 1 ou 2, dans lequel le support d'applique (54) et l'applique (30) sont conçus de sorte qu'un espace avant (76) entre un bord avant (31) de l'applique (30) et un bord arrière de la glace de portière avant (18) est inférieur à 10 mm, de préférence inférieur à 8 mm.

4. Agencement de portière selon l'une quelconque des revendications 1 à 3, dans lequel le support d'applique (54) et l'applique (30) sont conçus de sorte qu'un espace arrière (78) entre un bord arrière (38) de l'applique (30) et un bord avant de la glace de portière arrière (20) est inférieur à 10 mm, de préférence inférieur à 8 mm.

5. Agencement de portière selon l'une quelconque des revendications 1 à 4, dans lequel le support d'applique (54) est formé d'une seule couche ou d'une partie de feuille multicouche.

6. Agencement de portière selon l'une quelconque des revendications 1 à 5, dans lequel le support d'applique (54') comprend au moins un sertissage de renforcement (90a, 90b) qui s'étend dans une direction verticale (Z).

7. Agencement de portière selon l'une quelconque des revendications 1 à 6, dans lequel le support d'applique (54) est formé d'un seul tenant avec la coque de portière arrière (52).

8. Agencement de portière selon l'une quelconque des revendications 1 à 7, dans lequel le support d'applique (54) est formé d'un seul tenant avec la coque de portière arrière (52), dans lequel l'applique (30) recouvre au moins une partie du montant B (56), et dans lequel un axe de pivotement de portière arrière (37) est agencé entre un bord avant (31) et un bord arrière (38) de l'applique (30).

9. Agencement de portière selon la revendication 8, dans lequel le montant B (56) comprend une partie décalée (82) pour permettre à un bord avant (31) de l'applique (30) et au support d'applique (54) de pivoter autour de l'axe de pivotement de portière arrière (37) sans entrer en collision avec le montant B (56).

10. Agencement de portière selon la revendication 9, dans lequel la partie décalée (82) est formée dans une partie du montant B (56) au-dessus d'une ligne de ceinture (32) de l'agencement de portière (13).

11. Agencement de portière selon l'une quelconque des revendications 8 à 10, dans lequel un joint d'applique arrière (98) est relié à un côté intérieur de l'applique (30) et comporte une lèvre d'étanchéité (100) qui vient en prise dans un bord avant de la glace de portière arrière (20).
